**Europäisches Patentamt**

**European Patent Office**

**Office européen des brevets**

(19)

(11) Numéro de publication : **0 131 156 B2**

(12) # NOUVEAU FASCICULE DE BREVET EUROPEEN

(45) Date de publication du nouveau fascicule du brevet : **06.05.92 Bulletin 92/19**

(51) Int. Cl.⁵ : **B62D 9/00,** B62D 7/14

(21) Numéro de dépôt : **84106433.0**

(22) Date de dépôt : **06.06.84**

(54) **Dispositif de commande de direction d'un véhicule.**

(30) Priorité : **10.06.83 FR 8309701**

(43) Date de publication de la demande :
**16.01.85 Bulletin 85/03**

(45) Mention de la délivrance du brevet :
**07.01.88 Bulletin 88/01**

(45) Mention de la décision concernant
l'opposition :
**06.05.92 Bulletin 92/19**

(84) Etats contractants désignés :
**AT CH DE GB IT LI SE**

(56) Documents cités :
**DE-A- 2 902 927**
**DE-A- 3 122 575**

(56) Documents cités :
**FR-A- 1 503 337**
**FR-A- 2 236 712**
**FR-A- 2 351 841**
**US-A- 3 556 243**
**US-A- 4 175 638**
**US-A- 4 315 555**

(73) Titulaire : **Chapuis, Laurent**
**Les Gaillons Chapareillan**
**F-38530 Pontcharra (FR)**

(72) Inventeur : **Chapuis, Laurent**
**Les Gaillons Chapareillan**
**F-38530 Pontcharra (FR)**

(74) Mandataire : **Casalonga, Axel et al**
**BUREAU D.A. CASALONGA - JOSSE**
**Morassistrasse 8**
**W-8000 München 5 (DE)**

EP 0 131 156 B2

**Description**

La présente invention concerne un dispositif de commande de direction d'un véhicule à roues avant et/ou roues arrière directrices, en vue de braquer sélectivement les roues avant, respectivement les roues arrières, uniquement, ou les roues avant et les roues arrière simultanément.

Des dispositifs actuellement connus, qui permettent de braquer soit les roues avant du véhicule, soit ses roues avant et ses roues arrières simultanément, comprennent un système de liaison entre le dispositif de direction avant et le dispositif de direction arrière, ce dispositif de liaison étant mis en action ou étant mis hors d'action grâce à des opérations manuelles que le conducteur du véhicule ne peut effectuer qu'en descendant de son véhicule. Un dispositif de ce genre est connu par le brevet français 1 503 337.

On connaît également par les brevets FR 2 236 712, US 4 315 555 et US 4 175 638 des dispositifs de commande de direction d'un véhicule qui permettent de braquer sélectivement les roues avant uniquement ou les roues avant et les roues arrière simultanément, qui font intervenir l'orientation des roues du véhicule. Cependant, lorsqu'on sélectionne un mode de braquage simultané des roues avant et des roues arrière, le changement de mode de braquage se produit immédiatement quelle que soit l'orientation réciproque des roues avant et des roues arrière et, de plus, lorsqu'on sélectionne le mode de braquage des roues avant uniquement, les roues arrière sont ramenées dans leur orientation selon l'axe longitudinal du véhicule immédiatement et automatiquement, indépendamment de l'orientation ou des changements d'orientation des roues avant. Il s'ensuit qu'avec de tels dispositifs de commande de direction, il n'est absolument pas question, pour des raisons de sécurité, de changer de mode de braquage lorsque le véhicule est en marche.

On connait également par le brevet DE-A-3122575 un dispositif mécanique de commande de direction permettant deux modes de braquage. Ce dispositif comprend un plateau qui est susceptible d'être déplacé axialement d'une position de verrouillage à une position d'embrayage et réciproquement. Dans sa position de verrouillage, le plateau bloque la tringlerie de la direction arrière dans une position telle que les roues arrières sont orientées selon l'axe longitudinal du véhicule, seules les roues avant assurant le braquage. Dans sa position d'embrayage, le plateau relie la tringlerie de la direction avant à la tringlerie de la direction arrière pour assurer un mode de braquage simultané. Les dentures du plateau mobile précité et des plateaux opposés avec lesquels il est amené à coopérer sont conformées de telle sorte que le passage d'un mode de braquage à l'autre ne peut se produire que lorsque les roues avant et les roues arrière sont orientées selon l'axe longitudinal du véhicule.

La présente invention vise notamment à remédier aux inconvénients de l'état de la technique et propose un dispositif de commande de direction d'un véhicule à roues avant et/ou roues arrière directrices qui peut avantageusement permettre au conducteur du véhicule de choisir à tout moment le mode de braquage qu'il souhaite, les changements de mode de braquage en outre s'effectuant en toute sécurité.

Tel qu'il est revendiqué, le dispositif de commande de direction d'un véhicule à roues avant et/ou roues arrière directrices, en vue de braquer sélectivement les roues avant, respectivement, les roues arrière, uniquement, ou les roues avant et les roues arrières simultanément, dans la même orientation et/ou dans des orientations inverses, comprend : des moyens pour braquer les roues avant, des moyens pour braquer les roues arrière, des moyens de liaison pour relier sélectivement les moyens de braquage des roues avant et les moyens de braquage des roues arrière, des moyens de détection d'orientation des roues avant, des moyens de détection d'orientation des roues arrière, des moyens de sélection pour sélectionner l'un des modes de braquage susmentionnés, et des moyens de commande sensibles auxdits moyens de sélection et auxdits moyens de détection d'orientation et destinés à mettre en action ou hors d'action lesdits moyens de liaison; lesdits moyens de commande comprennent des moyens pour mettre en action lesdits moyens de liaison, dans le cas de la sélection à l'aide desdits moyens de sélection d'un braquage simultané des roues avant et des roues arrière, lorsque lesdits moyens de détection d'orientation des roues avant indiquent que les roues avant sont orientées selon l'axe longitudinal du véhicule, et pour mettre hors d'action lesdits moyens de liaison, dans le cas de la sélection à l'aide desdits moyens de sélection d'un braquage des roues avant uniquement, lorsque lesdits moyens de détection d'orientation des roues arrière indiquent que les roues arrière sont orientées selon l'axe longitudinal du véhicule et pour maintenir lesdits moyens de liaison dans leur état si le mode de braquage sélectionné et commandé est maintenu. Lesdits moyens de détection d'orientation des roues arrière comprenant des moyens de détection d'écart pour détecter et indiquer quand les roues arrière s'écartent de leur orientation selon l'axe longitudinal du véhicule, lesdits moyens de commande comprennent en outre des moyens sensibles auxdits moyens de détection d'écart pour mettre en action, quand le mode de braquage des roues avant uniquement est sélectionné, lesdits moyens de liaison en vue de braquer simultanément les roues avant et les roues arrière dans le sens qui ramène les roues arrière dans leur orientation selon l'axe longitudinal du véhicule et mettre hors d'action lesdits moyens de liaison quand cette orientation des roues arrière est à nouveau atteinte.

Il ressort des caractéristiques ci-dessus de l'invention que les moyens de commande tiennent compte des orientations des roues avant et des roues arrière pour la mise en action ou la mise hors d'action des moyens de liaison entre les moyens de braquage avant et les moyens de braquage arrière et qui permettent de choisir un mode de braquage différent à tout moment et en toute sécurité même si le véhicule est en marche car le changement de mode de braquage ne se produit, au cours du braquage des roues avant, que lorsque les roues avant et les roues arrière, dont l'orientation est surveillée, sont effectivement orientées selon l'axe longitudinal du véhicule qui constitue un axe de référence.

Le dispositif de commande de direction selon la présente invention peut également comprendre des moyens de verrouillage pour verrouiller lesdits moyens de braquage des roues arrière lorsque les roues arrière sont orientées selon l'axe longitudinal du véhicule, lesdits moyens de commande comprenant des moyens pour mettre hors service lesdits moyens de verrouillage en vue d'activer lesdits moyens de sélection. Dans une variante, les moyens de verrouillage peuvent comprendre un vérin hydraulique d'entraînement d'un doigt de verrouillage actionné par l'intermédiaire d'un électrodistributeur, lesdits moyens de commande comprenant des moyens pour faire fonctionner cet électro-distributeur.

Dans une variante de réalisation, lesdits moyens de braquage des roues avant et lesdits moyens de braquage des roues arrière peuvent avantageusement comprendre respectivement au moins un vérin hydraulique permettant leur braquage et lesdits moyens de liaison peuvent comprendre un électrodistributeur adapté pour relier hydrauliquement en série lesdits vérins hydrauliques, lesdits moyens de commande comprenant des moyens pour faire fonctionner sélectivement cet électro-distributeur.

Le dispositif de commande de direction selon la présente invention peut en outre comprendre des moyens pour détecter la vitesses du véhicule, lesdits moyens de commande comprenant des moyens sensibles aux moyens de détection de vitesse pour mettre hors d'action, lorsque la vitesse du véhicule dépasse une valeur déterminée, lesdits moyens de liaison quand lesdits moyens de détection d'orientation des roues arrière indiquent que les roues arrière sont orientées selon l'axe longitudinal du véhicule. De cette manière, lorsque la vitesse du véhicule dépasse ladite vitesse déterminée, il n'est possible de braquer que les roues avant.

Selon la présente invention, lesdits moyens de commande comprennent de préférence des moyens pour mettre en service les moyens de verrouillage des moyens de braquage des roues arrière, orientées selon l'axe longitudinal du véhicule lorsque la vitesse du véhicule dépasse ladite valeur déterminée.

Selon la présente invention, lesdits moyens de commande peuvent avantageusement comprendre des moyens permettant de mettre hors d'action lesdits moyens de liaison quelle que soit l'orientation des roues arrière.

Selon la présente invention, lesdits moyens de commande peuvent avantageusement comprendre des moyens pour mettre en action lesdits moyens de liaison quelle que soit l'orientation des roues arrière.

Le dispositif de commande de direction selon la présente invention peut être appliqué à tout véhicule et en particulier aux véhicules devant se déplacer dans des endroits restreints, difficiles d'accès, ou en pente, et en particulier aux véhicules utilisés pour effectuer des travaux en montagne, aux véhicules utilisés dans l'agriculture et aux véhicules de transport ou de manutention.

La présente invention sera mieux comprise à l'étude de deux dispositifs de commande de direction décrits à titre d'exemples non limitatifs et illustrés par le dessin sur lequel:

la figure 1 représente le schéma hydraulique d'un premier dispositif de commande de direction;

la figure 2 représente le schéma d'un circuit électronique de commande du circuit hydraulique représenté sur la figure 1;

la figure 3 représente le schéma hydraulique d'un second dispositif de commande de direction;

et la figure 4 représente le schéma d'un circuit électronique de commande du circuit hydraulique représenté sur la figure 3.

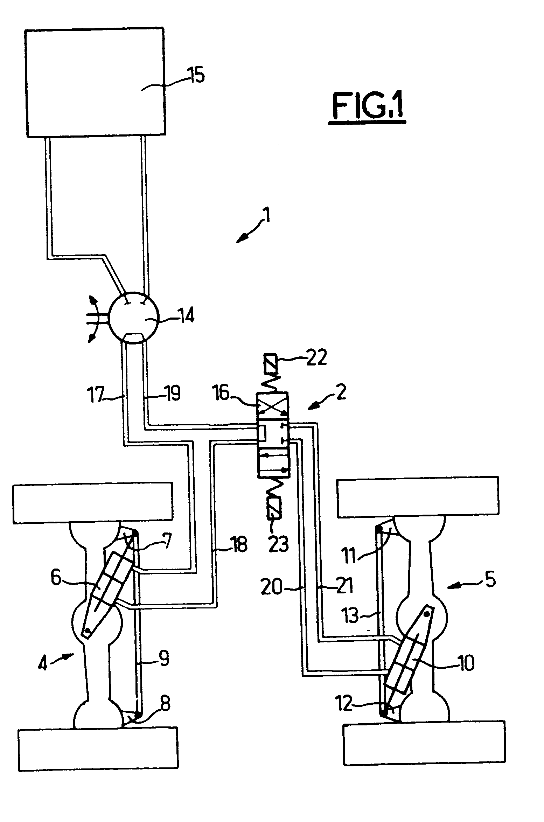

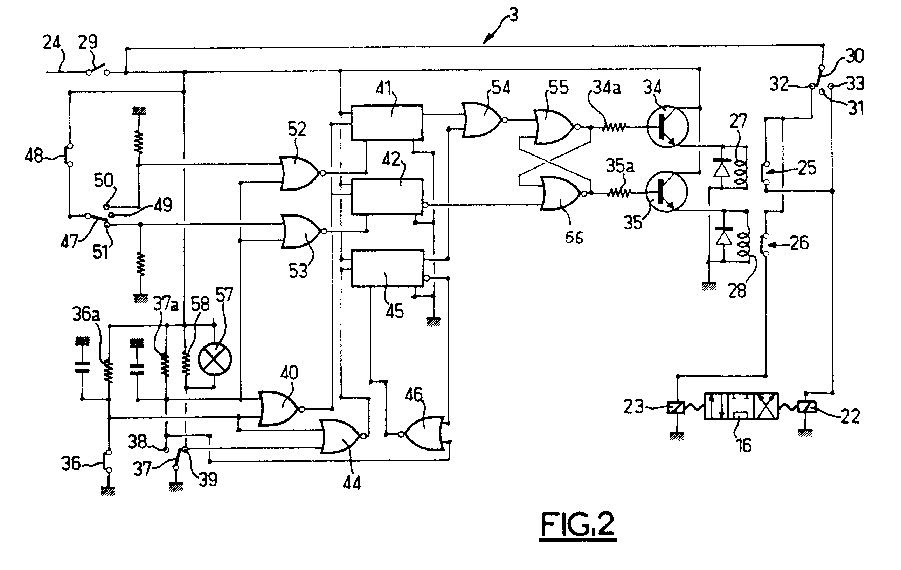

En se reportant aux figures 1 et 2, on va tout d'abord décrire un premier dispositif de commande de direction repéré d'une manière générale par la référence 1 comprenant un circuit hydraulique représenté sur la figure 1 et reperé d'une manière générale par la référence 2 et un circuit électronique visible sur la figure 2 et repéré d'une manière générale par la référence 3, ce dispositif de commande de direction 1 étant conçu pour braquer sélectivement les roues du train de roues avant repéré d'une manière générale par la référence 4 ou de braquer les roues du train de roues avant 4 et les roues du train de roues arrière repéré d'une manière générale par la référence 5 d'un véhicule par ailleurs non représenté.

En vue de braquer ou d'orienter les roues du train de roues avant 4, on a prévu un vérin hydraulique 6 adapté pour faire pivoter les biellettes de direction 7 et 8 dont les extrémités sont reliées par une traverse 9 et, de la même manière, en vue de braquer ou orienter les roues du train de roues arrière 5 du véhicule on a prévu un vérin hydraulique 10 adapté pour faire pivoter les biellettes de direction 11 et 12 dont les extrémités sont reliées par une traverse 13, les vérins hydrauliques 6 et 10 étant susceptibles d'être actionnés dans un sens ou dans l'autre.

Comme on peut le voir sur la figure 1, le volant non représenté du véhicule portant les trains de roues 4 et 5 est relié à une centrale hydraulique 14 susceptible de fournir un volume d'huile en provenance d'un réservoir d'huile 15, proportionnel au déplacement angulaire du volant. Les deux chambres de vérins 6 et 10 sont hydrauliquement branchées en série sur la centrale hydraulique 14 par l'intermédiaire d'un électrodistributeur 16 de la manière suivante. Un conduit 17 relie l'une des chambres du vérin hydraulique 6 à la centrale hydraulique 14, un conduit 18 relie l'autre chambre du vérin hydraulique 6 à l'électrodistributeur 16, un conduit 19 relie la centrale hydraulique 14 et l'électrodistributeur 16 et deux conduits 20 et 21 relient respectivement les deux chambres du vérin hydraulique 10 à l'électrodistributeur 16.

L'électrodistributeur 16 est un électrodistributeur à trois positions dont une position de repos dans laquelle l'huile peut circuler dans les conduits 17, 18 et 19 uniquement de telle sorte que seul le vérin 6 peut être activé, une seconde position lorsque sa première bobine 22 est excitée dans laquelle l'huile peut circuler dans le conduit 17, dans les conduits 18 et 21 au travers du électrodistributeur 16 et dans les conduits 19 et 20 au travers du distributeur 16 de telle sorte que le vérin 6 et le vérin 10 peuvent faire pivoter les roues des trains de roues 4 et 5 simultanément et dans des orientations inverses, et une troisième position lorsque la deuxième bobine 23 de l'électrodistributeur 16 est excitée en vue de faire circuler l'huile dans le conduit 17, dans les conduits 18 et 20 au travers de l'électrodistributeur 16 et dans les conduits 19 et 21 au travers du distributeur 16 de telle sorte que les vérins 6 et 10 peuvent braquer les roues des trains de roues 4 et 5 simultanément et dans la même orientation.

En se reportant à la figure 2, on va maintenant décrire le schéma du circuit électronique 3 destiné à activer sélectivement l'électrodistributeur 16 de liaison des vérins hydrauliques 6 et 10 de braquage des roues des trains de roues 4 et 5. L'alimentation générale 24 en énergie électrique peut être reliée respectivement aux bobines 22 et 23 de l'électrodistributeur 16 par l'intermédiaire de relais de puissance 25 et 26, ces relais de puissance 25 et 26 étant ouverts lorsque leurs bobines 27 et 28 ne sont pas alimentées.

L'alimentation générale en énergie électrique 24 est reliée respectivement aux relais de puissance 25 et 26 par l'intermédiaire d'un interrupteur général manuel 29 et d'un interrupteur manuel 30 à trois positions dont une position 31 de repos, une position 32 dans laquelle l'alimentation générale 24 est reliée respectivement aux relais de puissance 25 et 26 et une position 33 dans laquelle l'alimentation générale 24 est reliée directement à la bobine 22 de l'électrodistributeur 16.

Les bobines 27 et 28 des relais de puissance 25 et 26 peuvent être alimentées à partir de l'alimentation générale 24 au travers de transistors 34 et 35 lorsque ces derniers sont activés.

En vue d'indiquer au circuit électronique 3 dans quelle orientation se trouvent les roues des trains de roues 4 et 5, ce dernier comprend deux interrupteurs 36 et 37. L'interrupteur 36 est associé au train de roues avant 4, de façon classique et non visible sur les figures, de manière à être fermé lorsque les roues du train de roues avant 4 sont orientées selon l'axe longitudinal du véhicule et ouvert lorsque les roues du train de roues avant 4 sont orientées différemment. L'interrupteur 37 est associé de façon classique et non visible sur les figures au train de roues arrière 5 et est un interrupteur à deux positions dont une position 38 lorsque les roues du train de roues arrière 5 sont orientées selon l'axe longitudinal du véhicule et une position 39 lorsque ces dernières sont orientées différemment. L'interrupteur est branché entre l'alimentation générale 24 et la masse via l'interrupteur 29 et une résistance 36a. Le plot de contact 38 de l'interrupteur 37 est relié à l'alimentation générale 24 via l'interrupteur 29 et une résistance 37a, son plot commun étant relié à la masse.

Le circuit électronique 3 comprend une porte NON-OU 40 dont les entrées sont respectivement reliées à l'un des plots de contact de l'interrupteur 37 et dont la sortie est reliée à l'entrée d'horloge de deux bascules 41 et 42. Le premier plot de contact de l'interrupteur 36 et le plot de contact 39 de l'interrupteur 37 sont respectivement reliés aux entrées d'une porte NON-OU 44 dont la sortie est reliée à l'entrée d'horloge d'une troisième bascule 45. Le plot de contact 38 de l'interrupteur 37 et la sortie Q sont respectivement reliés aux entrées d'une porte NON-OU 46 dont la sortie est reliée à l'entrée de remise à zéro de la bascule 45.

Le circuit électronique 3 comprend également un interrupteur de sélection manuel 47 à trois positions dont le plot de contact commun est relié à l'alimentation générale 24 au travers de l'interrupteur 29 et d'un interrupteur 48 qui est normalement en position fermée mais qui est soumis à un dispositif de détection de vitesse du véhicule non visible sur les figures qui ouvre cet interrupteur 48 lorsque la vitesse du véhicule est supérieure à une vitesse déterminée. L'interrupteur de sélection 47 est un interrupteur à trois positions dont une position neutre 49, une position 50 qui, comme on le verra plus loin, autorise le braquage des roues des trains de roues 4 et 5 simultanément et dans des orientations inverses et une position 51 qui, comme on le verra plus loin, autorise un braquage des roues des trains de roues 4 et 5 simultanément et dans la même orientation.

Le circuit électronique 3 comprend une porte NON-OU 52 dont l'une des entrées est reliée au plot de contact 50 de l'interrupteur 47 et dont l'autre entrée est reliée au plot de contact 38 de l'interrupteur 37 tandis que sa sortie est reliée à l'entrée de remise à zéro de la bascule 41, ainsi qu'une porte NON-OU 53 dont l'une des entrées est reliée au plot de contact 51 de l'interrupteur 47 et au plot de contact 38 de l'interrupteur 37 tandis que sa sortie est reliée à l'entrée de remise de la bascule 42.

Les sorties Q des bascules 41 et 45 sont respectivement reliées aux entrées d'une porte NON-OU 54 dont la sortie est reliée à l'une des entrées d'une porte NON-OU 55 tandis que la sortie Q de la bascule 42 est reliée à l'une des entrées d'une porte NON-OU 56.

Les sorties des portes 55 et 56 sont respectivement reliées aux bases des transistors 34 et 35 par l'intermédiaire de résistances 34a et 35a, la sortie de la porte 55 étant reliée à l'autre entrée de la porte 56 et la sortie de la porte 56 étant reliée à l'autre entrée de la porte 55. Par ailleurs, les bascules 41, 42, 45 peuvent être alimentées par l'alimentation générale 24 via l'interrupteur général 29.

Le circuit électronique 3 comprend également un voyant lumineux 57 monté en parallèle à une résistance 58 entre l'alimentation 24 via l'interrupteur général 29 et le plot 39 de l'interrupteur 37.

On va maintenant décrire comment peut être utilisé le circuit électronique 3 et comment il fonctionne, en vue d'activer sélectivement l'électrodistributeur 16 pour autoriser sélectivement le braquage des roues des trains de roues avant et arrière 4 et 5.

Considérons que les roues du train de roues arrière sont orientées selon l'axe longitudinal du véhicule. Si le conducteur du véhicule maintient l'interrupteur 30 dans sa position neutre 31, les bobines 22 et 23 de l'électrodistributeur 16 ne peuvent pas être alimentées si bien que cet électrodistributeur 16 reste dans sa position de repos dans lequelle seules les roues du train de roues avant 4 peuvent être braquées par l'intermédiaire du vérin 6 sous l'action de la centrale hydraulique 14 activée par la rotation du volant du véhicule, quelle que soit l'orientation des roues du train de roues arrière 5.

Si le conducteur du véhicule place l'interrupteur 30 sur sa position 32, alors les bobines 22 et 23 peuvent être sélectivement activées via les relais de puissance 25 et 26 de la manière suivante, en supposant que la vitesse du véhicule soit inférieure à la vitesse déterminée comme mentionné plus haut de telle sorte que l'interrupteur 48 reste fermé.

Les roues du train de roues arrière 5 étant orientées selon l'axe longitudinal du véhicule, l'interrupteur 37 se trouve dans sa position 38. Si le conducteur du véhicule place l'interrupteur 47 dans sa position neutre 49, les sorties des portes 52 et 53 sont à un niveau haut, la sortie de la porte 44 est à un niveau bas quelle que soit la position de l'interrupteur 36, de telle sorte que les sorties Q des bascules 41 et 45 sont à un niveau bas et la sortie Q de la bascule 42 est à un niveau haut, la sortie de la porte 46 étant à un niveau bas. Il s'ensuit que la sortie de la porte 54 est à un niveau haut et que l'une des entrées de la porte 56 est à un niveau haut de telle sorte que les sorties des portes 55 et 56 restent à un niveau bas. En conséquence, les transistors 34 et 35 sont bloqués et les bobines 27 et 28 des relais de puissance ne sont pas alimentées, les bobines 22 ou 23 de l'électrodistributeur 16 n'étant en conséquence pas alimentées. L'électrodistributeur 16 reste dans sa position de repos et seules les roues du train de roues avant 4 peuvent être braquées par l'intermédiaire du volant du véhicule, de la centrale hydraulique 14 et du vérin 6.

Si le conducteur du véhicule place l'interrupteur de sélection 47 dans sa position 50, la sortie de la porte 52 passe à l'état bas tandis que la sortie de la porte 53 reste à l'état haut. Le conducteur du véhicule tournant le volant du véhicule et en conséquence modifiant l'orientation des roues du train de roues avant 4, lorsque les roues du train de roues avant 4 seront orientées selon l'axe longitudinal du véhicule, le contact 36 se ferme. En conséquence, la sortie de la porte 40 passe à un niveau haut et l'état de la bascule 41 est modifié. Sa sortie Q passe à un niveau haut de telle sorte que la sortie de la porte 54 passe à un niveau bas. Il s'ensuit que la sortie de la porte 56 reste à zéro mais que la sortie de la porte 55 passe à un niveau haut de telle sorte que le transistor 34 est saturé et qu'en conséquence la bobine 27 du relais de puissance 25 est excitée. La bobine 22 de l'électrodistributeur 16 étant excitée, cet électrodistributeur 16 se place dans la position mentionnée plus haut dans laquelle les roues des trains de roues 4 et 5 peuvent être braquées simultanément et dans des orientations inverses par l'intermédiaire des vérins 6 et 10 et de la centrale hydraulique 14, par rotation du volant du véhicule.

Si le conducteur du véhicule ne souhaite plus ce mode de braquage, il lui suffit de replacer l'interrupteur de sélection 47 dans sa position neutre 49. La sortie de la porte 52 passe alors à un niveau haut. Lorsque les roues du trains de roues arrière 5 sont orientées, par rotation du volant du véhicule, selon l'axe longitudinal du véhicule, le contact 37 se met dans sa position 38 de telle sorte que la bascule 41 revient à sont état initial. Sa sortie Q passe à un niveau bas, la sortie de la porte 54 passe à un niveau haut, et la sortie de la porte 55 passe à un niveau bas. Le transistor 34 se trouve bloqué et en conséquence la bobine 27 du relais de puissance 25 n'est plus excitée et la bobine 22 de l'électrodistributeur 16 n'est plus excitée et ce dernier revient dans sa position de repos de telle sorte que seules les roues du train de roues avant 4 peuvent être braquées, les roues du trains de roues arrière 5 restant orientées selon l'axe longitudinal du véhicule et en conséquence l'interrupteur 37 restant dans sa position 38.

Si le conducteur du véhicule place l'interrupteur de sélection 47 dans sa position 51, la sortie de la porte 53 passe à un niveau bas tandis que la sortie de la porte 52 reste à un niveau haut. Lorsque les roues du train de roues avant 4 sont orientées par rotation du volant du véhicule selon l'axe longitudinal de ce dernier, le contact 36 se ferme. La sortie de la porte 40 passe à un niveau haut et en conséquence la bascule 42 change d'état, sa sortie Q passe à un niveau bas. La sortie de la porte 55 reste à un niveau bas mais la sortie de la porte 56 passe à un niveau haut. Il s'ensuit que la bobine 28 du relais de puissance 26 est excitée au travers du transistor 35 et que la bobine 23 de l'électrodistributeur 16 est excitée. L'électrodistributeur 16 se place alors dans la position mentionnée plus haut dans laquelle, par rotation du volant du véhicule qui active la centrale hydraulique 14, les roues des trains de roues avant et arrière 4 et 5 peuvent être orientées simultanément et dans la même orientation par l'intermédiaire des vérins 6 et 10.

Si le conducteur du véhicule ne veut plus ce mode de braquage, il replace l'interrupteur de sélection 47 dans sa position neutre 49 de telle sorte que la sortie de la porte 53 passe à un niveau haut lorsque l'interrupteur 37 vient dans sa position 38 c'est-à-dire lorsque les roues du trains de roues arrière 5 sont orientées selon l'axe longitudinal du véhicule. La bascule 42 revient à son état initial de telle sorte que sa sortie Q passe à un niveau haut et que la sortie de la porte 56 passe à un niveau bas. Le transistor 35 étant de nouveau bloqué, la bobine 28 du relais de puissance 26 n'est plus excitée, la bobine 23 de l'électrodistributeur 16 n'est plus excitée et cet électrodistributeur 16 revient dans sa position de repos dans laquelle seules les roues du train de roues avant 4 peuvent être braquées.

Tel qu'il est conçu, le circuit électronique 3 permet un rappel automatique d'orientation des roues du train de roues arrière 5 selon l'axe longitudinal du véhicule. En effet, lorsque l'interrupteur de sélection 47 est dans sa position neutre 49 dans laquelle seules les roues du train de roues avant 4 peuvent être braquées, si les roues du train de roues arrière 5 quittent leur orientation selon l'axe longitudinal du véhicule, l'interrupteur 37 passe dans sa position 39. La sortie de la porte 44 passe à un niveau haut lorsque l'interrupteur 36 se ferme c'est-à-dire lorsque les roues du train de roues avant 4 sont orientées selon l'axe longitudinal du véhicule. La bascule 45 change d'état. Sa sortie Q passe à un niveau haut de telle sorte que la sortie de la porte 54 passe à un niveau bas. La sortie de la porte 55 passe à un niveau haut de telle sorte que la bobine 27 du relais de puissance 25 est excitée au travers du transistor 34 et en conséquence de la bobine 22 de l'électrodistributeur 16 est excitée, les roues des trains de roues 4 et 5 pouvant être en conséquence braquées simultanément et dans des orientations inverses et comme on l'a décrit plus haut. Lorsque les roues du train de roues arrière 5 sont replacées, par prolongation de la rotation du volant du véhicule, selon l'axe longitudinal du véhicule, l'interrupteur 37 revient dans sa position 38. La sortie de la porte 46 passe à un niveau haut et la bascule 45 revient à son état initial, sa sortie Q passant à zéro. La sortie de la porte 54 passe à un niveau haut et la sortie de la porte 55 passe à un niveau bas, la bobine 27 du relais de puissance 25 n'est plus excitée et la bobine 22 de l'électrodistributeur 16 n'est plus alimentée, cet électrodistributeur 16 revenant dans sa position de repos.

Si la vitesse du véhicule dépasse une valeur déterminée, l'interrupteur 48, comme on l'a vu plus haut, s'ouvre et en conséquence le circuit électronique 3 fonctionne comme si l'interrupteur de sélection 47 est ou est ramené à sa position neutre 49 comme on l'a décrit plus haut de telle sorte que les roues du train de roues arrière 5 sont maintenues ou sont ramenés dans leur orientation selon l'axe longitudinal du véhicule.

Grâce au voyant lumineux 47, le conducteur du véhicule peut savoir si les roues du train de roues arrière sont orientées selon l'axe longitudinal du véhicule. En effet, lorsque les roues du train de roues arrière 5 sont orientés selon l'axe longitudinal du véhicule, le voyant lumineux 47 est éteint et reste allumé pour toute autre position.

Si pour une raison quelconque et notamment à cause d'une panne du circuit électronique 3, le conducteur du véhicule souhaite ramener les roues du train de roues arrière 5 dans leur orientation selon l'axe longitudinal du véhicule, il lui suffit de placer l'interrupteur 30 dans sa position 33 pour alimenter directement la bobine 22 de l'électrodistributeur 16. En tournant le volant du véhicule, il peut braquer simultanément les roues du train de roues avant et arrière 4 et 5 jusqu'à ce que le voyant lumineux 57 s'éteigne lui indiquant que les roues du train de roues arrière 5 sont orientées selon l'axe longitudinal du véhicule. Il peut alors replacer l'interrupteur 30 dans sa position neutre 31 ou dans sa position de sélection 32.

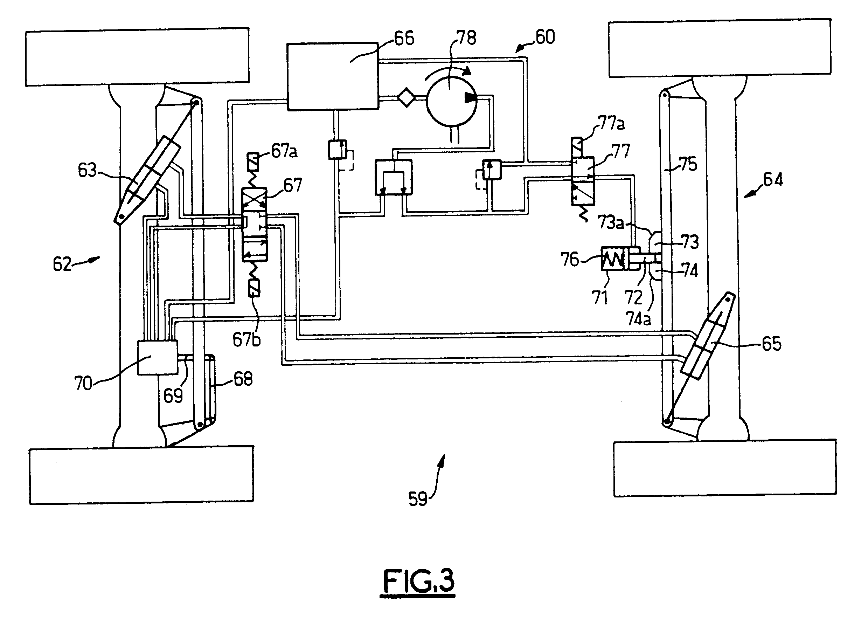

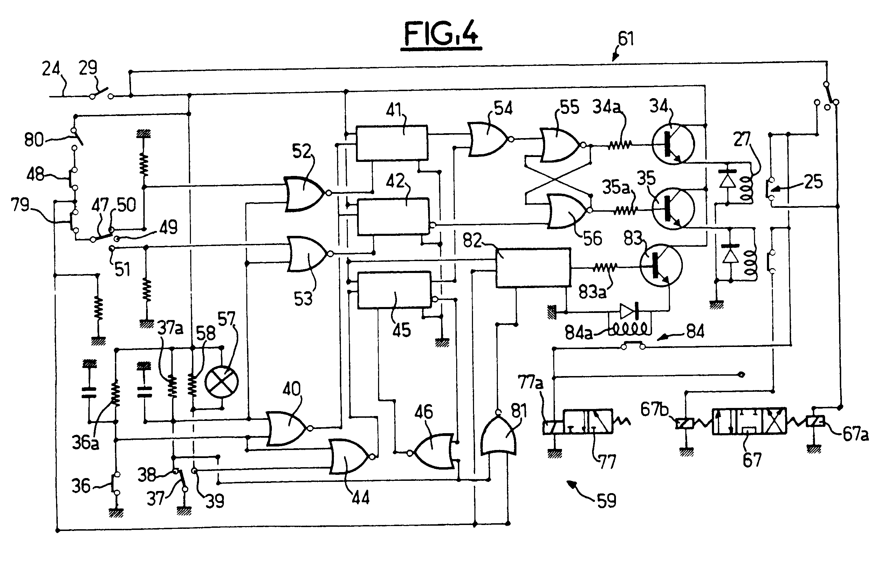

En se reportant maintenant aux figures 3 et 4, on va décrire un autre dispositif de commande de direction d'un véhicule qui se différencie du dispositif de commande de direction décrit en référence aux figures 1 et 2 essentiellement par le fait que le volant permet l'orientation des roues du train de roues avant par l'intermédiaire d'une liaison mécanique classique assisté hydrauliquement et qu'il est prévu un verrouillage mécanique commandé hydrauliquement pour verrouiller le train de roues arrière dans la position dans laquelle les roues de ce train de roues sont orientées selon l'axe longitudinal du véhicule.

Le dispositif de commande de direction représenté sur les figures 3 et 4 et repéré d'une manière générale par la référence 59 comprend un circuit hydraulique repéré d'une manière générale par la référence 60 représenté sur la figure 3 et un circuit électronique repéré d'une manière générale par la référence 61 et représenté sur la figure 4.

En se reportant à la figure 3, on voit que le véhicule comprend, comme précédemment, un train de roues avant repéré d'une manière générale par la référence 62 et muni d'un vérin 63 équivalent au vérin 6 du dispositif représenté sur la figure 1 et un train de roues arrière repéré d'une manière générale par la référence 64 et muni d'un vérin 65 équivalent au vérin 10 du dispositif représenté sur la figure 1.

Comme précédemment, le circuit hydraulique 60 comprend un réservoir 66 et un électrodistributeur 67 adapté pour relier sélectivement les vérins 63 et 65 comme le faisait l'électrodistributeur 16 du circuit hydraulique 2 représenté sur la figure 1.

Dans cet exemple cependant, le volant du véhicule non visible sur le dessin est relié au train de roues avant 62 en vue d'orienter ses roues par l'intermédiaire d'une liaison mécanique classique dont seules deux biellettes de direction 68 et 69 ont été représentées.

Comme on peut le voir sur la figure 3, le circuit hydraulique 60 comprend un dispositif d'assistance hydraulique 70 d'un type classique qu'il n'y a pas lieu de décrire plus amplement et qui est monté sur l'un des conduits aboutissant au vérin 63.

En vue du verrouillage du train arrière 64 dans sa position dans laquelle ses roues sont orientées selon l'axe longitudinal du véhicule, on a prévu un vérin hydraulique 71 qui porte un doigt de verrouillage 72 susceptible de pénétrer dans un évidement ménagé entre deux taquets 73 et 74 qui sont portés par la traverse 75 correspondant à la traverse 13 du dispositif représenté sur la figure 1.

Le vérin 71 comprend un ressort 76 qui agit de manière à faire pénétrer le doigt 72 dans l'évidement ménagé entre les taquets 73 et 74 et comprend une chambre de réception d'huile dont la pression permet d'agir à l'encontre du ressort 76 pour faire sortir le doigt 72 de cet évidement et ainsi libérer ou déverrouiller le train de roues arrière 64. En vue de la commande hydraulique de ce vérin 71, le circuit hydraulique 60 comprend un électrodistributeur 77 susceptible d'être alimenté en huile par l'intermédiaire d'une pompe à engrenages 78 de manière classique.

En se reportant à la figure 4, on va maintenant décrire le circuit électronique 61 qui est adapté pour faire fonctionner le circuit hydraulique 60 représenté sur la figure 3.

Ce circuit électronique 61 comprend une partie qui reprend exactement le circuit électronique 3 représenté sur la figure 2 en vue de faire fonctionner l'électrodistributeur 67 du circuit hydraulique 60 selon les mêmes modes de fonctionnement que ceux décrits en référence aux figures 1 et 2, l'électrodistributeur 67 comprenant à cet effet deux bobines 67a et 67b qui correspondent aux bobines 22 et 23 de l'électrodistributeur 16. On a donc repris sur la figure 4, pour les éléments communs, les mêmes références que celles du circuit électronique 3 visible sur la figure 2.

Entre l'interrupteur 48 et l'interrupteur de sélection 47, le circuit électronique 61 comprend un interrupteur 79 qui est associé au vérin 71 et qui ouvert lorsque le vérin 71 verrouille le train de roues arrière 64 et fermé lorsque le train de roues arrière 64 est déverrouillé, c'est-à-dire lorsque l'électrodistributeur 77 alimente le vérin 71.

Entre l'alimentation générale 24 en énergie électrique via l'interrupteur général 29 et l'interrupteur 48, le circuit électronique 61 comprend un interrupteur manuel 80 autorisant le fonctionnement de l'interrupteur de sélection 47, après déverrouillage.

Le circuit électronique 61 est complété par une porte NON-OU 81 dont une entrée est reliée au plot de contact 38 de l'interrupteur 37 et dont l'autre entrée est reliée à la ligne commune entre les interrupteurs 48 et 79, cette ligne étant par ailleurs reliée à l'entrée d'horloge d'une bascule 82. La sortie de la porte 81 est reliée à l'entrée de remise à zéro de la bascule 82 dont la sortie Q est reliée à la base d'un transistor 83 via une résistance 83a. Un relais de puissance 84 est prévu pour alimenter la bobine d'actionnement 77a de l'électrodistributeur 77 via le plot de contact 32 de l'interrupteur 30, la bobine de ce relais de puissance 84 étant susceptible d'être alimentée par l'alimentation générale 24 via l'interrupteur général 29 et le transistor 83.

On va maintenant décrire comment peut fonctionner le circuit 61 représenté sur la figure 4, associé au circuit hydraulique 60 représenté sur la figure 3.

Considérant que les roues du train de roues arrière 64 sont orientées selon l'ace longitudinal du véhicule de telle sorte que le doigt de verrouillage 72 du vérin 71 le verrouille et l'interrupteur 79 est ouvert. Lorsque le conducteur du véhicule ferme l'interrupteur 80. La vitesse du véhicule étant telle que l'interrupteur 48 est dans sa position fermée, la sortie de la porte 81 passe à un niveau bas de telle sorte que la sortie Q de la bascule 82 passe à un niveau haut, il s'ensuit que la bobine 84a du relais de puissance 84 est excitée au travers du transistor 83 et ferme le circuit d'alimentation de la bobine 77a de l'électrodistributeur 77 qui alors actionne le vérin 71 à l'encontre de son ressort 76 jusqu'à déverrouillage du train de roues arrière 64. Lorsque le train de roues arrière 64 est déverrouillé, l'interrupteur 79 se ferme. Le circuit électronique 64 se trouve alors dans l'état du circuit électronique 3 représenté sur la figure 2 et tous les modes de fonctionnement de ce circuit électronique 3 décrits plus haut sont possibles et notamment les différentes commandes de l'électrodistributeur 67 en vue des différents modes de braquage décrits.

Lorsque l'interrupteur 48 s'ouvre à cause d'une survitesse du véhicule ou lorsque le conducteur du véhicule ouvre l'interrupteur 80, la sortie de la porte 81 passe à un niveau bas lorsque les roues du train de roues arrières 64 sont orientées selon l'axe longitudinal du véhicule car l'interrupteur 37 passe à sa position 38 dans cette orientation. Il s'ensuit que la sortie Q de la bascule 83 passe à un niveau bas de telle sorte que la bobine 84a du relais de puissance 84 n'est plus alimentée et que ce relais de puissance 84 coupe le circuit d'alimentation coupe le circuit d'alimentation de la bobine 77a de l'électrodistributeur 77 qui revient à sa position initiale. Ce faisant, le ressort 77 du vérin 71 ramène son doigt de verrouillage 72 dans sa position initiale et verrouille le train de roues arrière 64. L'interrupteur 79 s'étant alors ouvert, toute manoeuvre de l'interrupteur de sélection 47 n'a aucun effet tant que le doigt de verrouillage 72 reste dans sa position de verrouillage du train de roues arrière 64.

Comme dans l'exemple précédent, il est possible de ramener les roues du train de roues arrière 64 dans l'axe longitudinal du véhicule en agissant manuellement sur l'électrodistributeur 67 ou en plaçant l'interrupteur 30 à sa position 33, les taquets 73 et 74 présentant comme on peut le voir sur la figure 3, des surfaces inclinées 73a et 74a qui permettent au doit de verrouillage 72 du vérin 71 de venir dans l'évidement ménagé entre ses taquets pour verrouiller le train de roues arrière 64 lorsque le train de roues arrière 64 est braqué simultanément au train de roues avant.

En outre, dans les deux exemples décrits ci-dessus, en plaçant l'interrupteur 30 dans sa position 33, il est possible, par manoeuvre du volant du véhicule, de disposer les roues du train de roues arrière 64 ou du train de roues arrière 5 dans une orientation déterminée quelconque et de maintenir cette position en replaçant cet interrupteur 30 dans sa position neutre 31 au moment où l'orientation des roues du train de roues arrière 64 ou 5 choisie est atteinte. Bien entendu, dans le deuxième exemple, il faut déverrouiller le train de roues arrière 64 par action sur le vérin 71 soit manuellement soit en fermant l'interrupteur 80.

La présente invention ne se limite pas aux deux exemples ci-dessus décrits. Bien d'autres variantes de réalisation sont possibles sans sortir du cadre de la présente invention défini par les revendications annexées.

## Revendications

1. Dispositif de commande de direction d'un véhicule à roues avant et/ou roues arrière directrices, en vue de braquer sélectivement les roues avant, respectivement, les roues arrière, uniquement, ou les roues avant et les roues arrière simultanément, dans la même orientation et/ou dans des orientations inverses, comprenant : des moyens (6; 63) pour braquer les roues avant, des moyens (10 ;65) pour braquer les roues arrière, des moyens de liaison (16 ; 67) pour relier sélectivement les moyens de braquage des roues avant et les moyens de braquage des roues arrière, des moyens de détection d'orientation (36) des roues avant, des moyens de détection d'orientation (37) des roues arrière, des moyens de sélection (47) pour sélectionner l'un des modes de braquage susmentionnés, et des moyens de commande sensibles auxdits moyens de sélection et auxdits moyens de détection d'orientation et destinés à mettre en action ou hors d'action lesdits moyens de liaison, caractérisé par le fait que lesdits moyens de commande comprennent des moyens pour mettre en action lesdits moyens de liaison (16 ; 67), dans le cas de la sélection à l'aide desdits moyens de sélection (47) d'un braquage simultané des roues avant et des roues arrière, lorsque lesdits moyens de détection d'orientation (36) des roues avant indiquent que les roues avant sont orientées selon l'axe longitudinal du véhicule, et pour mettre hors d'action lesdits moyens de liaison (16 ; 67), dans le cas de la sélection à l'aide desdits moyens de sélection (47) d'un braquage des roues avant uniquement, lorsque lesdits moyens de détection d'orientation (37) des roues arrière indiquent que les roues arrière sont orientées selon l'axe longitudinal du véhicule et pour maintenir lesdits moyens de liaison (16 ; 67) dans leur état si le mode de braquage sélectionné et commande est maintenu ; lesdits moyens de détection d'orientation (37) des roues arrière comprenant des moyens de détection d'écart pour détecter et indiquer quand les roues arrière s'écartent de leur orientation selon l'axe longitudinal du véhicule ; lesdits moyens de commande comprenant en outre des moyens sensibles auxdits moyens de détection d'écart pour mettre en action, quand le mode de braquage des roues avant uniquement est sélectionné, lesdits moyens de liaison (16 ; 67) en vue de permettre un braquage simultané des roues avant et les roues arrière dans le sens qui ramène les roues arrière dans leur orientation selon l'axe longitudinal du véhicule et mettre hors d'action lesdits moyens de liaison (16 ; 67) quand cette orientation des roues arrière est à nouveau atteinte.

2. Dispositif de commande de direction selon revendication 1, caractérisé par le fait qu'il comprend des moyens de verrouillage (72) pour verrouiller lesdits moyens de braquage des roues arrière quand les roues arrière sont orientées selon l'axe longitudinal du véhicule, lesdits moyens de commande comprenant des moyens pour mettre hors service ces moyens de verrouillage en vue d'activer lesdits moyens de sélection (47).

3. Dispositif de commande de direction selon la revendication 2, caractérisé par le fait que lesdits moyens de verrouillage comprennent un vérin hydraulique (71) d'entraînement d'un doigt de verrouillage (72) actionné par l'intermédiaire d'un électrodistributeur, lesdits moyens de commande comprenant des moyens pour faire fonctionner sélectivement cet électrodistributeur.

4. Dispositif de commande de direction selon l'une quelconque des revendications précédentes, caractérisé par le fait qu'il comprend en outre des moyens pour détecter la vitesse du véhicule, lesdits moyens de commande comprenant des moyens (48) sensibles auxdits moyens de détection de vitesse pour mettre hors service, lorsque la vitesse du véhicule dépasse une valeur déterminée, lesdits moyens de liaison (16 ; 67) quand lesdits moyens de détection d'orientation (37) des roues arrière indiquent que les roues arrière sont orientées selon l'axe l'ongitudinal du véhicule.

5. Dispositif de commande de direction selon la revendication 4, caractérisé par le fait que lesdits moyens de commande comprennent des moyens (84) pour mettre en service les moyens de verrouillage (72) des moyens de braquage des roues arrière, orientées selon l'axe longitudinal du véhicule lorsque la vitesse du véhicule dépasse ladite valeur déterminée.

6. Dispositif de commande de direction selon l'une quelconque des revendications précédentes, caractérisé par le fait que lesdits moyens de commande comprennent des moyens manoeuvrables (30) permettant de mettre hors d'action lesdits moyens de liaison (16 ; 67) quelle que soit l'orientation des roues arrière.

7. Dispositif de commande de direction selon l'une quelconque des revendications précédentes, caractérisé par le fait que lesdits moyens de commande comprennent des moyens manoeuvrables (30) pour mettre directement en action lesdits moyens de liaison (16 ; 67) quelle que soit l'orientation des roues arrière et indépendamment desdits moyens de sélection (50).

8. Dispositif de commande selon l'une quelconque des revendications précédentes, caractérisé par le fait que lesdits moyens de braquage des roues avant et lesdits moyens de braquage des roues arrière comprennent respectivement au moins un vérin hydraulique (6, 10 ; 63, 65) permettant leur braquage et lesdits moyens de liaison comprennent un électrodistributeur (16 ; 67) adapté pour relier hydrauliquement en série lesdits vérins hydrauliques, lesdits moyens de commande faisant fonctionner sélectivement cet électrodistributeur.

**Patentansprüche**

1. Lenkeinrichtung für ein Kraftfahrzeug mit einschlagbaren Vorderrädern und/oder einschlagbaren Hinterrädern, zu dem Zweck, wahlweise die Vorderräder bzw. die Hinterräder jeweils allein oder die Vorderräder und die Hinterräder gleichzeitig in der gleichen Richtung und/oder in entgegengesetzten Richtungen einzuschlagen, umfassend: Mittel (6;63) zum Einschlagen der Vorderräder, Mittel (10;65) zum Einschlagen der Hinterräder, Verbindungsmittel (16;67), mit deren Hilfe die Mittel zum Einschlagen der Vorderräder wahlweise mit den Mitteln zum Einschlagen der Hinterräder verbindbar sind, Mittel (36) zum Anzeigen der Stellung der Vorderräder, Mittel (37) zum Anzeigen der Stellung der Hinterräder, Wählmittel (47) zum Wählen der einen der oben erwähnten Einschlagsarten und auf die genannten Wählmittel und die genannten Mittel zur Stellungsanzeige ansprechende Steuerungsmittel, die zum Inbetriebsetzen oder Außerbetriebsetzen der genannten Verbindungsmittel dienen, dadurch gekennzeichnet, daß die genannten Steuerungsmittel Mittel zum Inbetriebsetzen der genannten Verbindungsmittel (16;67) für den Fall umfassen, daß mit Hilfe der genannten Wählmittel (47) ein gleichzeitiger Lenkeinschlag der Vorderräder und der Hinterräder gewählt ist und die genannten Mittel (36) zum Anzeigen der Stellung der Vorderräder anzeigen, daß die Vorderräder in Richtung der Fahrzeuglängsachse stehen, und zum Außerbetriebsetzen der genannten Verbindungsmittel (16;67) für den Fall, daß mit Hilfe der genannten Wählmittel (47) ein Lenkeinschlag der Vorderräder allein gewählt ist und die genannten Mittel (37) zum Anzeigen der Stellung der Hinterräder anzeigen, daß die Hinterräder in Richtung der Fahrzeuglängsachse stehen, und zum Festhalten der genannten Verbindungsmittel (16;67) in ihrem Zustand, wenn die gewählte und gesteuerte Art des Lenkeinschlags beibehalten wird, wobei die genannten Mittel (37) zur Anzeige der Stellung der Hinterräder Mittel zum Feststellen von Abweichungen umfassen, um festzustellen und anzuzeigen, wenn die Hinterräder sich aus ihrer Stellung in Richtung der Fahrzeuglängsachse entfernen, wobei die genannten Steuerungsmittel außerdem auf die genannten Mittel zum Feststellen von Abweichungen ansprechende Mittel umfassen, um die genannten Verbindungsmittel (16;67), wenn die Arbeitsweise des alleinigen Einschlags der Vorderräder gewählt ist, in Betrieb zu setzen, um einen gleichzeitigen Einschlag der Vorderräder und der Hinterräder in dem Sinne zu ermöglichen, daß die Hinterräder in ihre Stellung in Richtung der Fahrzeuglängsachse zurückgeführt werden, und um die genannten Verbindungsmittel (16;67) außer Betrieb zu setzen, wenn diese Stellung der Hinterräder wieder erreicht ist.

2. Lenkeinrichtung nach Anspruch 1, dadurch gekennzeichnet, daß sie Verriegelungsmittel (72) zum Sperren der genannten Mittel zum Einschlagen der Hinterräder aufweist, wenn die Hinterräder in Richtung der Fahrzeuglängsachse stehen, wobei die genannten Steuerungsmittel Mittel aufweisen zum Außerbetriebsetzen der Verriegelungsmittel zu dem Zweck, die genannten Wählmittel (47) zu aktivieren.

3. Lenkeinrichtung nach Anspruch 2, dadurch gekennzeichnet, daß die genannten Verriegelungsmittel einen Arbeitszylinder (71) für den Antrieb eines Riegelfingers (72) aufweisen, der über ein Elektro-Wegeventil betätigt wird, wobei die genannten Steuerungsmittel Mittel zum Schalten des Elektro-Wegeventils enthalten.

4. Lenkeinrichtung nach einem der vorhergehenden Ansprüche, dadurch gekennzeichnet, daß außerdem Mittel zum Ermitteln der Fahrzeuggeschwindigkeit vorgesehen sind, wobei die genannten Steuerungsmittel Mittel (48) aufweisen, die auf die die Geschwindigkeit anzeigenden Mittel ansprechen, um die genannten Verbindungsmittel (16;67), wenn die Fahrzeuggeschwindigkeit einen vorbestimmten Wert übersteigt, außer Betrieb zu setzen, sofern die genannten Mittel (37) zur Anzeige der Stellung der Hinterräder erkennen lassen, daß die Hinterräder in Richtung der Fahrzeuglängsaches stehen.

5. Lenkeinrichtung nach Anspruch 4, dadurch gekennzeichnet, daß die genannten Steuerungsmittel Mittel (84) zum Inbetriebsetzen der Mittel (72) zum Verriegeln der Mittel zum Einschlagen der in Richtung der Fahrzeuglängsachse stehenden Hinterräder umfassen, sofern die Fahrzeuggeschwindigkeit den genannten vorbestimmten Wert übersteigt.

6. Lenkeinrichtung nach einem der vorhergehenden Ansprüche, dadurch gekennzeichnet, daß die genannten Steuerungsmittel Betätigungsmittel (30) aufweisen, die das Außerbetriebsetzen der genannten Verbindungsmittel (16;67) erlauben, unabhängig von der Stellung der Hinterräder.

7. Lenkeinrichtung nach einem der vorhergehenden Ansprüche, dadurch gekennzeichnet, daß die genannten Steuerungsmittel Betätigungsmittel (30) aufweisen für das unmittelbare Inbetriebsetzen der genannten Verbindungsmittel (16;67), unabhängig von der Stellung der Hinterräder und unabhängig von den genannten Wählmitteln (47).

8. Lenkeinrichtung nach einem der vorhergehenden Ansprüche, dadurch gekennzeichnet, daß die genannten Mittel zum Einschlagen der Vorderräder und die genannten Mittel zum Einschlagen der Hinterräder jeweils mindestens einen Arbeitszylinder (6,10;63,65) aufweisen, der das Einschlagen bewirkt, und die genannten Verbindungsmittel ein Elektro-Wegeventil (16;67) aufweisen, das die genannen Arbeitszylinder hintereinanderschalten kann, wobei die genannten Steuerungsmittel Mittel aufweisen, mit denen dieses Elektro-Wegeventil wahlweise geschaltet werden kann.

**Claims**

1. Steering control device for a vehicle with front-wheel drive and/or rear-wheel drive, for the purpose of selectively deflecting respectively the front wheels or the rear wheels only or the front wheels and the rear wheels simultaneously in the same orientation and/or in opposite orientations, comprising means (6; 63) for deflecting the front wheels, means (10; 65) for deflecting the rear wheels, connection means (16; 67) for selectively connecting the front-wheel deflection means and the rear-wheel deflection means, means (36) for detecting the orientation of the front wheels, means (37) for detecting the orientation of the rear wheels, selection means (47) for selecting one or the above-mentioned deflection modes, and control means sensitive to the said selection means and to the said orientation detection means and intended for activating or inactivating the said connection means, characterised in that the said control means comprise means for activating the said connection means (16; 67), in the event that the said selection means (47) select a simultaneous deflection of the front wheels and of the rear wheels, when the said means (36) for detecting the orientation of the front wheels indicate that the front wheels are oriented along the longitudinal axis of the vehicle, and for inactivating the said connection means (16; 67), in the event that the said selection means (47) select a deflection of the front wheels only, when the said means (37) of detecting the orientation of the rear wheels indicate that the rear wheels are oriented along the longitudinal axis of the vehicle, and for maintaining the state of the said connection means (16; 67) if the deflection mode selected and controlled is maintained; the said means (37) for detecting the orientation of the rear wheels comprising movement detection means for detecting and indicating when the rear wheels move away from their orientation along the longitudinal axis of the vehicle; the said control means also comprising means sensitive to the said movement detection means for activating, when the mode for deflecting the front wheels only is selected, the said connection means (16; 67) in order to permit simultaneous deflection of the front wheels and the rear wheels in the direction returning the rear wheels to their orientation along the longitudinal axis of the vehicle, and for inactivating the said connection means (16; 67) when this orientation of the rear wheels is reached again.

2. Steering control device according to Claim 1, characterised in that it possesses locking means (72) for locking the said rear-wheel deflection means when the rear wheels are oriented along the longitudinal axis of the vehicle, the said control means having means for inactivating these locking means for the purpose of activating the said selection means (47).

3. Steering control device according to Claim 2, characterised in that the said locking means comprise a hydraulic jack (71) for driving a locking finger (72) actuated by the agency of an electrical distributor, the said control means possessing means for selectively operating this electrical distributor.

4. Steering control device according to any one of the preceding claims, characterised in that it also possesses means detecting the speed of the vehicle, the said control means having means (48) sensitive to the said speed detection means, in order, when the speed of the vehicle exceeds a specific value, to inactivate the said connection means (16; 67), when the said means (37) for detecting the orientation of the rear wheels indicate that the rear wheels are oriented along the longitudinal axis of the vehicle.

5. Steering control device according to Claim 4, characterised in that the said control means possess means (84) for activating the locking means (72) for the means of deflecting the rear wheels oriented along the longitudinal axis of the vehicle, when the speed of the vehicle exceeds the said specific value.

6. Steering control device according to any one of the preceding claims, characterised in that the said control means possess actuable means (30) making it possible to inactivate the said connection means (16; 67), whatever the orientation of the rear wheels.

7. Steering control device according to any one of the preceding claims, characterised in that the said control means possess actuable means (30) for directly activating the said connection means (16; 67), whatever the orientation of the rear wheels and independently of the said selection means (50).

8. Steering control device according to any one of the preceding claims, characterised in that the said means for deflecting the front wheels and the said means for deflecting the rear wheels comprise respectively at least one hydraulic jack (6, 10; 63, 65) making it possible to deflect them, and the said connection means comprise an electrical distributor (16; 67) designed to connect the said hydraulic jacks hydraulically in series, the said control means operating this electrical distributor selectively.

FIG.1

FIG.2

EP 0 131 156 B2

FIG.3

FIG.4

EP 0 131 156 B2